# EUROPÄISCHE PATENTANMELDUNG

(11) **EP 1 763 171 A1**
(43) Veröffentlichungstag der Anmeldung: **14.03.2007**
(21) Anmeldenummer: 05019888.6
(22) Anmeldetag: 13.09.2005
(51) Int. Cl.: H04L 12/24

(54) **Identifikation von Kommunikationskanälen**

(71) Anmelder: SIEMENS AKTIENGESELLSCHAFT, 80333 München (DE)
(72) Erfinder: Nitsch, Karina, 14482 Postdam (DE)

(57) **Zusammenfassung**

Für Kanäle eines Kommunikationsnetzes, die bereits durch erste Identifikatoren gekennzeichnet sind, die ein technologisches Identifikationsschema bilden, wird ein technologieunabhängiges Schema definiert. Gemäß diesem zweiten Schema werden den Kanälen zweite, technologieunabhängige Identifikatoren zugeordnet, mit denen die Kanäle identifiziert werden.

## Beschreibung

In dem internationalen Standard M.3010 (02/2000) der ITU-T ist eine Referenzarchitektur eines Telecommunications Management Network (TMN) zur Überwachung und Steuerung eines Kommunikationsnetzes beschrieben, bei der davon ausgegangen wird, dass das von dem TMN gesteuerte Netz unterschiedliche Typen von Netzelementen umfasst, die mit Hilfe von passenden Kommunikationsmechanismen gesteuert werden. Die Mechanismen sind z.B. Protokolle mit Regeln für einen Austausch von Management Informationen. Der Austausch wird z.B. mit Hilfe von Meldungen oder Nachrichten bewirkt. Die Informationen werden auch Objektmodell genannt.

Das TMN umfasst u.a. folgende Funktionalitäten:
- Operations Systems Function (OSF), die das "eigentliche" Management des Telekommunikationsnetzes realisiert.
- Workstation Function (WSF), die zur visuellen Darstellung der Steuervorgänge und des Netzzustandes dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der meist nicht international genormt ist. Die Summe aller Management Informationen des NE wird als Management Information Base (MIB) des NE bezeichnet. Sie wird im Weiteren auch NE-MIB genannt.
- Transformation Function (TF), die zur Verbindung von Komponenten mit unterschiedlichen Kommunikationsmechanismen und insbesondere zur Anbindung von Netzelementen, die keine mit einer internationalen Norm kompatible NEF aufweisen, an das TMN eingesetzt wird. Sie wird in dem Standard M.3010 (05/96) auch als Mediation Function bzw. als Q-Adaption Function bezeichnet.

Des Weiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse - auch Produkte genannt - bewirkt, die beispielsweise als Netzelement (NE), Operations System (OS), Applikation, Terminal, Router, Switch, Datenbankserver oder Computerprogrammprodukt (auch Programm, Applikationen oder Software genannt) ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentral angeordnet ist, während die NE in dem Netz dezentral auf eine Vielzahl von Standorten verteilt sind.

Ein OS kann mehrere Programme umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezifische Teilmenge der Ressourcen des Netzes modelliert, visualisiert und gesteuert wird.

Die Programme werden von Hardware (z.B. Prozessor, i/o Baugruppe) ausgeführt, die in den gegenständlichen Erzeugnissen vorgesehen ist. Diese Ausführung wird von Supportsoftware (z.B. Multitasking bzw. Multithreading Betriebssystem, Datenbanksystem, Windows System) unterstützt.

Die einzelnen Funktionseinheiten können durch integrierte, von einem Hersteller realisierte und verkaufte Produkte oder durch ein System mehrerer, von unterschiedlichen Herstellern getrennt realisierter und verkaufter Produkte durchgeführt werden, wobei im zweiten Fall die Produkte jeweils einen Teil der Gesamtfunktionalität durchführen und so zusammenwirken, dass insgesamt die gleiche Funktionalität realisiert wird wie bei einer integrierten Realisierung der Funktionalitäten.

Diese Produkte können auch als Computerprogrammprodukte ausgebildet sein, die von Hardware (z.B. zumindest einem Prozessor) ausgeführt werden, von der die gegenständliche Ausführungsumgebung der Produkte gebildet wird. Diese Ausführung wird häufig von Supportsoftware (z.B. Multitasking bzw. Multithreading Betriebssystem, Datenbanksystem, Windows System) unterstützt.

In Kommunikationsnetzen ist üblicherweise eine Vielzahl von Kommunikationskanälen vorgesehen. Bei der Steuerung eines derartigen Netzes ist eine Technologie zur Identifikation der Kanäle erforderlich, damit die einzelnen Kanäle gezielt angesprochen und gesteuert werden können. Die Festlegung einer Identifikationstechnologie ist schwierig, da sich bislang kein einheitlicher Standard herausgebildet hat.

Insgesamt ist die Umsetzung der beschriebenen Architektur in konkrete Lösungen infolge der Verteiltheit des Systems und der Vielzahl an unterschiedlichen Funktionalitäten, Systemkomponenten und Anforderungen eine hochkomplexe technische Problemstellung.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Auf Grund der fortschreitenden Integration von elektrischen und optischen Komponenten steigt die Anzahl der Kommunikationskanäle, die von einzelnen Netzelementen umfasst werden, immer weiter an.
   Parallel dazu sind die zeitgemäßen Darstellungstechnologien durch immer größere und höher auflösende Bildschirme und schnellere Bildverarbeitungsprozessoren gekennzeichnet, so dass die Menge der darstellbaren und dargestellten Informationen zunimmt.
   Dies führt in Kombination dazu, dass in den Workstation Functions der Netzmanagementsysteme immer mehr Kanäle gleichzeitig angezeigt werden.
- Damit entsteht nach Erkenntnis der Erfindung das neue Bedürfnis nach einer Identifikationstechnologie für die Kommunikationskanäle, die auch bei gleichzeitiger Darstellung von sehr vielen Kanälen noch übersichtlich bleibt.
- Die bekannten Identifikationstechnologien orientieren sich an der gesteuerten Kommunikationstechnologie und nicht an der Frage nach ihrer Übersichtlichkeit bei hohen Stückzahlen. Ein Umdenken und lösen von diesem Paradigma ist nicht bekannt. Gerade dies ist hier aber erforderlich.
- Eine einfache Identifikation der Kanäle wird somit vor allem bei größeren Netzen und Bildschirmen zu einer komplexen und schwierigen Aufgabe.

Die bekannten Techniken lösen die erkannte Problematik nicht oder haben zumindest unerwünschte Nebeneffekte:
- Bei Systemen wie z.B. PCM30 (Puls Code Modulation mit 30 Nutzkanälen und zwei Signalisierungskanälen), in denen die Kanäle mit Hilfe von Zeitschlitzen realisiert werden, die von ihrer relativen Lage innerhalb eines Rahmens abhängen, ist eine Identifikation über die Nummer der Lage bekannt. Es wird dabei die absolute Nummer der Lagen für die Identifikation der Kanäle verwendet, d.h. die 30 Nutzkanäle haben die Nummern 1-15 und 17-32, weil die Kanäle mit den Lagen 0 und 16 für die Signalisierung verwendet werden.
- WDM Systeme arbeiten technologisch- und/oder bestückungsbedingt in unterschiedlichen Frequenzbereichen / -bändern (z.B. Rot oder Blau, C oder L Band), mit unterschiedlichen Frequenzrastern (z.B. 33, 50, 100, 200 GHz Raster), mit unterschiedlicher Kanalzahl (z.B. 8, 16, 40, 80), und/oder mit unterschiedlichen Frequenzgruppen und Frequenzgruppenlücken. Bei derartigen optischen Systemen bzw. generell bei Systemen, die stark von Frequenzen und Wellenlängen abhängen, ist eine Identifikation über Kanalfrequenzen (z.B. 195400 GHz / 195450 GHz / usw.) oder über Wellenlängen (z.B. 1541,35 nm / 1541,74 nm / usw.) die Regel. Mit Hilfe dieser Werte wird bei netzelementübergreifenden Bedienoperationen wie z.B. einem Routen von optischen Pfaden oder dem Einrichten von Services die Kompatibilität und Eindeutigkeit zwischen den verschiedenen Systemen sichergestellt.
   Die Identifikation eines Kanals über die Frequenz oder Wellenlänge ist zwar über die Systeme hinweg eindeutig. Sie ist jedoch im täglichen Umgang mit dem System für den Bediener schwer handhabbar, vor allen wenn es sich um sechsstellige, komplexe Zahlenwerte handelt, die sich schlecht merken lassen und mit denen man schwierig kommunizieren kann.

Eine Lösung für die erfindungsgemäß erkannte Problemsituation sowie vorteilhafte Ausgestaltungen dieser Lösung sind in den Patentansprüchen angegeben, die ebenfalls der Beschreibung der Erfindung dienen und mithin Teil der Beschreibung sind.

Die Erfindung wird nachfolgend anhand von Ausführungsbeispielen erläutert. Es sei betont, dass die aufgezeigten Ausführungen der Erfindung lediglich beispielhafter Natur sind und somit auch dann nicht einschränkend zu verstehen sind, wenn eine Ausführung der Erfindung sehr detailgetreu dargestellt wird.

Produkte zur Durchführung der Erfindung können als Computerprogrammprodukte ausgebildet sein. Zur vereinfachten Darstellung der Erfindung wird davon ausgegangen, dass jedes Computerprogrammprodukt eindeutig einer bestimmten Datei entspricht. Für den Fachmann ist jedoch klar, dass diese Einschränkung nicht zwingend ist und ein Computerprogrammprodukt jederzeit auch eine Vielzahl von Dateien umfassen kann.

Gemäß einer Ausführung der Erfindung wird vorgeschlagen, anstelle oder zusätzlich zu einem ersten, technologieabhängigen Identifikationsschema zur Kanalidentifizierung, z.B. über Frequenz- bzw. Wellenlängen, ein zweites, technologieunabhängiges Schema zur Kanalidentifizierung, z.B. Kanalnummerierung und/oder -namensgebung, zur Verfügung zu stellen. Bevorzugt erfolgt dies im Netzmanagementsystem. Es werden betreiberspezifische Anforderung bzgl. des Nummerierungs- und/oder Namensschemas berücksichtigt sowie die eingangs beschriebenen Gegebenheiten.

Gemäß einer Ausgestaltung wird eine Mehrzahl von möglichen /denkbaren Nummerierungs- bzw. Namensschemata hinterlegt, mit denen jeweils den Kanalfrequenzen bzw. -wellenlängen Nummern und/oder Namen zugeordnet werden.

Gemäß einer weiteren Ausgestaltung werden das Schema oder die Schemata im Netzelement hinterlegt. Die hinterlegten Schemata werden über eine Datenschnittstelle zum Management des Netzelements für ein Managementsystem zugänglich gemacht. Über die Managementschnittstelle ist auswählbar und im Netzelement abgespeichert, welches Schema für dieses Netzelement zutreffen soll. Ferner ist es möglich, über die Managementschnittstelle die hinterlegten Schemata zu bearbeiten sowie weitere individuelle Schemata hinzuzufügen.

Ein Netzmanagementsystem kann aus dem Netzelement abfragen bzw. in einem Netzelement hinterlegen, welches Schema für das jeweilige Netzelement anzuwenden ist.

Das Netzmanagementsystem benutzt das jeweils definierte Schema für die Kanalidentifizierung entweder zusätzlich zu Frequenz/Wellenlänge oder anstelle dieser.

**Beispiel für ein Nummerierungsschema:**

| Kanalfrequenz / GHz | Kanalwellenlänge / nm | Nummer |
|---|---|---|
| 192.350 | 1558,57 | 76 |
| 192.300 | 1558,98 | 77 |
| 192.250 | 1559,39 | 78 |
| 192.200 | 1559,79 | 79 |
| 192.150 | 1560,20 | 80 |
| 192.100 | 1560,60 | 81 |
| 192.050 | 1561,01 | 82 |
| 192.000 | 1561,42 | 83 |

**Beispiel für ein Namensschema:**

| Kanalfrequenz / GHz | Kanalwellenlänge / nm | Name |
|---|---|---|
| 192.350 | 1558,57 | Tulpe |
| 192.300 | 1558,98 | Rose |
| 192.250 | 1559,39 | Jasmin |
| 192.200 | 1559,79 | Lavendel |
| 192.150 | 1560,20 | Lilie |
| 192.100 | 1560,60 | Narzisse |
| 192.050 | 1561,01 | Sonnenhut |
| 192.000 | 1561,42 | Pfeilchen |

Die Erfindung beschreibt die Definition und Auswahl von Schemata anzuwenden jeweils für ein gesamtes Netzelement. Es lässt sich auch in feinerer Granularität umsetzen: Gemeint ist hier die Definition und Auswahl von Schemata jeweils pro Netzelement-Untereinheit wie z.B. pro Rack, pro Subrack, pro Shelf, pro Karte usw. in Analogie.

Die Erfindung ist nicht beschränkt auf WDM Technologie, sondern sie lässt sich auch anwenden auf Netzelemente jeglicher Technologie, die eine Identifizierung einer Frequenz oder Wellenlänge nötig macht.

Mit der Erfindung ist eine Vielzahl von weiteren Vorteilen verbunden:
- Die Identifikation der Kanäle weist eine weitgehende Flexibilität auf, da wahlweise ausgewählt werden kann:
   a) Nichtbenutzung einer zusätzlichen / alternativen Kanalidentifizierung für alle / einzelne Netzelemente (oder deren Untereinheiten):
   b) Anwendung unterschiedlicher zusätzlicher / alternativer Kanalidentifizierungen für Netzelemente oder für Gruppen von Netzelementen (oder der Untereinheiten);
   c) Netzweit einheitlichen zusätzlichen / alternativen Kanalidentifizierung.
- Bisherige manuelle Bedienabläufe werden verkürzt und Fehler bei der Bedienung durch die verbesserte, ergonomische Kanalidentifizierung reduziert oder ganz vermieden.
- Eine Implementierung im Netzmanagement frei von netzelementabhängigen Besonderheiten wie Frequenzbereiche, -bänder, -raster, Kanalzahl, Frequenzgruppen und/oder - lücken, Bestückung und/oder Technologie.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse / Produkte und insb. Computerprogrammprodukte verteilt realisiert werden kann.

## Patentansprüche

1. Verfahren zur Identifikation von Kanälen eines Kommunikationsnetzes, wobei die Kanäle durch erste, technologieabhängige Identifikatoren **gekennzeichnet** sind, die ein erstes, technologieabhängiges Identifikationsschema bilden, mit folgenden Schritten:
(a) Definition eines zweiten, technologieunabhängigen Schemas, gemäß dem den Kanälen zweite, technologieunabhängige Identifikatoren zugeordnet werden;
(b) Identifikation der Kanäle mit Hilfe der zweiten Identifikatoren.

2. Verfahren nach dem vorstehenden Anspruch,
bei dem die Kanäle von zumindest einer gegenständlichen Einheit des Kommunikationsnetzes umfasst sind und das zweite Schema in einer lokalen, der Einheit zugeordneten Datenbasis gespeichert wird.

3. Verfahren nach einem der vorstehenden Ansprüche,
bei dem auswählt und in der lokalen Datenbasis abgespeichert wird, welches zweite Schema für diese Einheit zutrifft.

4. Verfahren nach einem der vorstehenden Ansprüche,
bei dem mehrere zweite Schemata definiert werden.

5. Verfahren nach dem vorstehenden Anspruch,
bei dem jeweils ein ausgewähltes, zweites Schema zur Identifikation verwendet wird.

6. Verfahren nach einem der vorstehenden Ansprüche,
bei dem die Kanäle wahlweise entweder mit Hilfe der ersten, der zweiten oder beiden Identifikatoren identifiziert werden.

7. Produkt, umfassend Mittel, die zur vollständigen Durchführung des vorstehenden Verfahrens eingerichtet sind.

8. Produkt, ausgebildet als gegenständliche Einheit eines Kommunikationsnetzes, umfassend zumindest ein zweites Schema, das zur Durchführung des vorstehenden Verfahrens verwendet wird.

9. Produkt, ausgebildet als Netzmanagementsystems (OS) für ein Kommunikationsnetz, von dem zumindest ein zweites Schema, zur Durchführung des vorstehenden Verfahrens eingenutzt wird.

10. Produkt, ausgebildet als Computerprogrammprodukt (SW) mit Programmcode, der so strukturiert ist, dass das vorstehende Verfahren immer dann vollständig durchführt wird, wenn der Programmcode des Produkts von zumindest einem Prozessor ausgeführt wird.

## Geänderte Patentansprüche

### Geänderte Patentansprüche gemäss Regel 86(2) EPÜ.

**1.** Verfahren zur Identifikation von Kanälen eines Kommunikationsnetzes, wobei
- die Kanäle durch erste, technologieabhängige Identifikatoren **gekennzeichnet** sind, die ein erstes, technologieabhängiges Identifikationsschema bilden,
- zu Bildung der ersten Identifikatoren eine Identifizierung einer Frequenz oder Wellenlänge nötig ist,
- die ersten Identifikatoren so ausgebildet sind, dass die Frequenz oder Wellenlänge erkennbar ist,
mit folgenden Schritten:
(a) Definition eines zweiten, technologieunabhängigen Schemas, gemäß dem den Kanälen zweite, technologieunabhängige Identifikatoren zugeordnet werden;
(b) Identifikation der Kanäle mit Hilfe der zweiten Identifikatoren.
